# DEMANDE DE BREVET EUROPEEN

(11) **EP 3 920 282 A1**
(43) Date de publication de la demande: **08.12.2021**
(21) Numéro de dépôt: 21177425.2
(22) Date de dépôt: 02.06.2021
(51) Int. Cl.: H01M 4/46, H01M 10/054, H01M 10/0565

(54) **PROCESSUS DE FABRICATION D'UN ÉLECTROLYTE POLYMÈRE GÉLIFIÉ, ET UTILISATION DE CET ÉLECTROLYTE POLYMÈRE GÉLIFIÉ**

(30) Priorité: 02.06.2020 FR 2005766
(71) Demandeur: Solvionic, 31100 Toulouse (FR); Technische Universität Berlin Zentrum Für Geistiges Eigentum, 13355 BERLIN (DE)
(72) Inventeur: LIN, Rongying, 31770 COLOMIERS (FR); FANTINI, Sébastien, 31400 TOULOUSE (FR); ELIA, Giuseppe Antonio, 89073 ULM (DE); HAHN, Robert, 13156 BERLIN (DE)
(74) Mandataire: IP Trust

(57) **Abrégé**

L'invention concerne un processus de fabrication d'un électrolyte polymère gélifié (GPE), comprenant les étapes :
- de solubilisation d'un polymère dans un solvant, conduisant à la formation d'une première solution homogène ;
- de mélange de ladite solution avec un électrolyte constitué de chlorure d'aluminium avec un rapport pondéral prédéterminé électrolyte:polymère ;
- de mélange dudit mélange jusqu'à obtenir une seconde solution homogène ;
- de versement de ladite seconde solution homogène sur un substrat ;
- d'élimination/d'évaporation du solvant pour obtenir une membrane GPE homogène et mécaniquement stable ;
- de processus d'activation de la membrane polymère, pour poursuivre le décapage/dépôt d'aluminium sur la membrane GPE.

## Description

### DOMAINE DE L'INVENTION

La présente invention concerne un processus de fabrication d'un électrolyte polymère gélifié, et l'utilisation de cet électrolyte polymère gélifié dans des dispositifs de stockage d'énergie tels que des batteries aluminium-ion et pour un revêtement métallique contre la corrosion.

Le domaine de l'invention comporte le stockage d'énergie, des supercondensateurs et des batteries, le dépôt d'aluminium pour les dispositifs électroniques, la microélectronique, le revêtement en aluminium des métaux pour la protection contre la corrosion.

### CONTEXTE TECHNOLOGIQUE

Les batteries aluminium sont considérées comme un système de stockage électrochimique alternatif valide, caractérisé par un faible coût et une durabilité élevée. L'utilisation de l'aluminium métallique comme anode présente plusieurs avantages : c'est l'élément métallique le plus abondant sur la croûte terrestre, il se caractérise par une très bonne capacité volumétrique de 8 040 mAh cm⁻³ (anode lithium-métal 2 063 mAh cm⁻³, anode graphite en lithium-ion 1 066 mAh cm⁻³) et par une capacité spécifique satisfaisante de 2 980 mAh g⁻¹ [1].

L'un des principaux inconvénients des batteries aluminium secondaires est associé à la très forte corrosivité de l'électrolyte de chloroaluminate généralement utilisé pour ce système. Ces électrolytes sont instables et se décomposent lors d'une exposition à l'air et à l'eau. L'électrolyte de référence est le chloroaluminate fondu : AlCl₃ dans EMIMCl (rapport molaire 1,5:1).

La forte corrosivité de l'électrolyte conduit à une limitation des matériaux actifs de la batterie ainsi que de l'emballage des cellules de la batterie. L'acier inoxydable, le nickel, le titane se corrodent ; les joints en caoutchouc requis pour une étanchéité efficace de la cellule, les séparateurs et les liants sont toujours soumis à la corrosion par ces électrolytes. Les fuites entraîneront des conséquences désastreuses pour les utilisateurs.

L'atténuation de la réactivité et de la corrosivité de l'électrolyte est nécessaire pour permettre l'application pratique de ces systèmes. Les solutions existantes comportent l'utilisation d'électrolytes moins corrosifs mais réduisant la capacité de stockage à 50 % de l'électrolyte de référence. Une autre solution existante est l'utilisation d'un matériau compatible avec l'électrolyte pour la réalisation de bloc de cellules.

Cependant, avec le tungstène ou le molybdène comme collecteur de courant et les matériaux PTFE pour le conditionnement de cellule, cela augmentera considérablement le coût du dispositif, rendant le système inadapté à une application pratique. Les électrolytes à l'état solide ont été mis en œuvre dans la technologie lithium-métal, sans fuite et une sécurité accrue dans les batteries et la manipulation des électrolytes.

Les articles Adv. Funct. Mater. 2019, 29, 1806799 et Chem. Commun. 2016, 52, 292 décrivent la préparation d'un électrolyte polymère gélifié obtenu par polymérisation radicalaire. Cette approche conduit à de bons résultats à l'échelle du laboratoire. Cependant, l'obtention d'un électrolyte gélifié par polymérisation radicalaire est entravée par le contrôle limité du degré de polymérisation. De petites variations de température, de concentration, etc. peuvent conduire à des produits différents. De plus, la polymérisation in-situ nécessite l'utilisation d'un activateur qui reste dans l'électrolyte et à long terme peut affecter le comportement électrochimique du système.

Le document US20170149106A1 décrit une batterie lithium-air comportant une couche de diffusion de gaz qui est au moins partiellement remplie d'air, ayant un matériau électriquement conducteur comme cathode, un filtre au moins partiellement imprégné d'électrolyte ayant un matériau électriquement non conducteur comme séparateur et une anode ayant un lithium-métal, un alliage lithium-métal ou un mélange lithium-oxyde-métal. Le séparateur est situé entre l'anode et la cathode, et l'électrolyte comporte un liquide ionique hydrophobe et un sel de lithium. Les trois phases, l'air gazeux, l'électrolyte liquide et le matériau conducteur solide sont en contact sur au moins un point de la couche de diffusion de gaz.

Bien que les batteries à base d'électrolyte liquide possèdent d'excellentes performances électrochimiques, elles posent de graves risques pour la sécurité, résultant de l'utilisation de solvants organiques hautement inflammables/volatils. Cela inclut les fuites d'électrolyte, éventuellement un incendie ou une explosion, la formation de dendrite et les réactions secondaires entre les électrolytes et les électrodes. Le problème de sécurité des batteries aluminium rechargeables devrait même être plus grave que celui des batteries lithium, en raison de la réactivité élevée de l'électrolyte à base de chloroaluminate utilisé. En conséquence, l'utilisation d'électrolytes solides (SE) peut garantir un niveau de sécurité intrinsèquement élevé, une stabilité thermique élevée, une fenêtre de stabilité électrochimique plus large, une durée de vie plus longue, d'excellentes propriétés mécaniques, une flexibilité et des processus d'assemblage simples car les SE servent à la fois de voie de transport d'ions et de séparateur sans composant liquide/fluide. Par conséquent, le développement de batteries à l'état solide peut conduire à la découverte des systèmes de stockage électrochimiques pour une application dans un stockage de mobilité, stationnaire et de réseau électrique. Cependant, les principaux inconvénients liés à l'utilisation des SE sont leur mauvaise conductivité ionique par rapport à celles des liquides, les interfaces difficiles à contrôler entre les électrodes (c'est-à-dire une résistance d'interface élevée) et les problèmes liés aux processus d'ingénierie.

Les électrolytes polymères gélifiés (GPE) se différencient des « électrolytes polymères secs » car ils incorporent un composant liquide servant de plastifiant. Ainsi, le GPE a des propriétés intermédiaires entre les électrolytes liquides et polymères. Ils sont généralement caractérisés par une conductivité plus élevée par rapport aux électrolytes polymères secs, se situant aux environs de 10⁻³ S cm⁻¹, tandis que le polymère sec et le liquide possèdent des conductivités d'environ 10⁻⁴ S cm⁻¹ et environ 10⁻² S cm⁻¹ respectivement.

Les GPE se caractérisent par une inflammabilité réduite et des problèmes de fuite d'électrolytes limités, et en général par un niveau de sécurité plus élevé par rapport aux électrolytes liquides, mais inférieur à celui des électrolytes polymères secs [2]. Ces caractéristiques les rendent extrêmement attrayants en tant qu'électrolytes de nouvelle génération pour des applications de batterie pratiques. Ce sujet a été largement exploré pour les batteries au lithium [2].

Plusieurs polymères ont été étudiés pour la réalisation de GPE, y compris l'oxyde de polyéthylène (PEO) [3-6], les membranes sulfoniques perfluorées (type NAFION) [7-9], le polyacrylonitrile (PAN) [10,11], le poly(méthacrylate de méthyle) (PMMA) [12-14] et le fluorure de polyvinylidène (PVdF) [15-23].

Cependant, pour une application de batterie aluminium, la plupart des polymères utilisés comme liants ou pour la réalisation de séparateurs et de boîtiers de cellule ne sont pas stables dans l'électrolyte de chloroaluminate fondu [24-26]. De plus, la corrosion du collecteur de courant métallique limite le choix au molybdène ou au tungstène coûteux [27]. Pour surmonter ces problèmes, une possibilité est d'utiliser des électrolytes sans chlore, caractérisés par une stabilité plus élevée contre les composants de cellule. De nombreux efforts ont été consacrés à la réalisation d'une composition d'électrolyte capable de décaper et de déposer efficacement de l'aluminium métallique et d'être non corrosive [28-30]. Malheureusement, jusqu'à présent, un électrolyte efficace capable de poursuivre le processus de dépôt/décapage d'aluminium avec une efficacité proche celle de l'électrolyte de chloroaluminate fondu n'est pas disponible. Pour cette raison, une approche alternative est d'atténuer la réactivité de l'électrolyte de chloroaluminate en maintenant son activité [31], ou de le piéger dans une matrice polymérique obtenant un électrolyte polymère gélifié [32,33]. L'inclusion de la masse fondue de chloroaluminate réactive dans la matrice polymérique peut atténuer la réactivité élevée. Sun *et al.* [33] ont rapporté un GPE obtenu par polymérisation radicalaire libre capable de maintenir son activité après une exposition à l'air. Yu *et al.* [32] ont rapporté un GPE obtenu avec une procédure de préparation similaire obtenant d'excellentes performances en utilisant leur GPE dans la batterie aluminium/graphite.

L'article « Gel Polymer Electrolytes for Electrochemical Energy Storage », de X Cheng *et a*l., publié dans Advanced Energy Materials (https://doi.org/10.1002/aenm.201702184), décrit des électrolytes polymères gélifiés (GPE) fonctionnels qui fournissent une auto-protection et sont thermotolérants aux capacités d'auto-guérison.

La technologie de pointe actuelle repose sur l'électrolyte à base de chloroaluminate hautement corrosif, limitant ainsi l'application pratique du système.

Le but de la présente invention est de pallier ces inconvénients en proposant un nouveau processus de fabrication d'un électrolyte polymère gélifié aux propriétés améliorées, et de nouvelles utilisations de cet électrolyte.

### RESUME DE L'INVENTION

Cet objectif est atteint avec un processus de fabrication d'un électrolyte polymère gélifié (GPE), comprenant les étapes :
- de solubilisation d'un polymère dans un solvant, conduisant à la formation d'une première solution homogène ;
- de mélange de ladite solution avec un électrolyte constitué de chlorure d'aluminium avec un rapport pondéral prédéterminé électrolyte:polymère ;
- de mélange dudit mélange jusqu'à obtenir une seconde solution homogène ;
- de versement de ladite seconde solution homogène sur un substrat ;
- d'élimination/d'évaporation du solvant pour obtenir une membrane GPE homogène et mécaniquement stable ;
- de processus d'activation de la membrane polymère, pour poursuivre le décapage/dépôt d'aluminium sur la membrane GPE.

Le rapport pondéral électrolyte:polymère est de préférence compris entre 10:1 et 0,5:1.

La membrane GPE a avantageusement une épaisseur comprise entre 200 et 300 µm.

Dans un premier mode de réalisation du processus selon l'invention, le polymère comprend du poly(diallyldiméthylammonium)bis(trifluorométhanesulfonyl)imide (polyDDATFSI).

Dans un second mode de réalisation du processus selon l'invention, le polymère comprend du polyacrylonitrile (PAN).

Le solvant utilisé dans le procédé selon l'invention peut comprendre un liquide ionique.

L'électrolyte utilisé dans le processus selon l'invention comprend du chlorure d'aluminium, en particulier il peut comprendre du chlorure de 1-éthyl-3-méthylimidazolium-chlorure d'aluminium (EMIMCl:AlCl³).

Le processus d'activation comprend une étape d'immersion de la membrane GPE dans un électrolyte comprenant du chlorure d'aluminium, de préférence du EMIMCl:AlCl³.

Ainsi, l'électrolyte mélangé avec le polymère pour la préparation de la membrane GPE est un chlorure d'aluminium, tout comme l'électrolyte utilisé pour immerger la membrane GPE lors de l'étape d'activation. Ces deux électrolytes peuvent être identiques ou différents. Dans un mode réalisation préféré, au moins l'un des électrolytes est du EMIMCl:AlCl³.

Selon un autre aspect de l'invention, un dispositif de stockage d'énergie électrochimique est proposé comme comprenant une anode, une cathode, et entre lesdites anode et cathode, un électrolyte polymère gélifié (GPE) obtenu à partir du processus selon l'invention.

Dans le cadre de l'invention, une cellule de batterie aluminium-ion peut comprendre une anode en aluminium métallique, un électrolyte polymère gélifié (GPE) et une cathode qui peut comprendre une feuille de graphite pyrolytique (PG) comme cathode.

L'électrolyte polymère gélifié (GPE) obtenu à partir du processus de l'invention peut également être utilisé pour un revêtement métallique comme protection contre la corrosion.

La présente invention comprend l'incorporation de l'électrolyte réactif dans une matrice polymère afin d'atténuer le problème de réactivité et de corrosivité.

Les électrolytes polymères gélifiés selon l'invention sont caractérisés par une réactivité limitée, maintenant une activité électrochimique appropriée. La mise en œuvre de cette technologie peut faciliter la réalisation de batteries aluminium alternatives aux batteries lithium-ion de pointe actuelles. L'utilisation d'un système à base d'aluminium apporte le grand avantage de l'abondance élevée et du faible coût des matières premières d'aluminium, ce qui devrait donc affecter positivement le coût du système et sa durabilité.

Les avantages attendus de l'invention comportent un faible coût et une durabilité élevée du système, un processus de décapage/dépôt d'aluminium efficace avec une corrosivité limitée et un niveau de sécurité amélioré de la technologie des batteries grâce à la configuration à l'état solide.

La présente invention comporte la préparation d'un GPE par l'intermédiaire d'un procédé de coulée au solvant, plus facile à mettre à l'échelle par rapport aux procédés de polymérisation radicalaire. Le GPE obtenu a été entièrement caractérisé en termes de propriétés électrochimiques, mettant en évidence une bonne conductivité ionique et la capacité à poursuivre efficacement le processus de dépôt/décapage d'aluminium. La réactivité réduite du GPE préparé a été vérifiée en comparant le comportement à la corrosion de l'acier inoxydable 316 dans le GPE et l'électrolyte EMIMCl:AlCl³ classique, entraînant ainsi une réduction d'un ordre de grandeur du courant de corrosion pour l'électrolyte GPE.

EMIMCl signifie « chlorure de 1-éthyl-3-méthylimidazolium ».

En résumé, le procédé de préparation selon l'invention conduit à une membrane homogène et transparente caractérisée par une bonne stabilité mécanique. Le GPE obtenu est caractérisé par une conductivité ionique d'environ 0,25 mS cm⁻¹ à température ambiante. Le GPE a une bonne compatibilité chimique avec l'électrolyte fondu de chloroaluminate, ce qui permet de confiner le liquide dans le solide tout en gardant les propriétés du liquide vis-à-vis de la conductivité ionique.

L'inclusion de l'électrolyte EMIMICl:AlCl³ dans le GPE lors de l'étape d'activation (gonflement du GPE par immersion) réduit sa corrosivité, notamment contre un collecteur de courant en acier inoxydable 316.

L'électrolyte GPE est stable jusqu'à 2,45 V par rapport à Al/Al3⁺.

Le GPE garantit un faible surpotentiel lors du processus de dépôt de l'Al stripping (50 mV à un courant de 0,1 mA cm⁻² et un temps de dépôt de 1h).

Le GPE fonctionne correctement dans la cellule Al/graphite, en utilisant une cathode en graphite pyrolytique, de sorte qu'une capacité de 63 mAh g⁻¹ (courant de 25 mA g⁻¹) peut être obtenue.

### DESCRIPTION DES FIGURES

L'invention sera mieux comprise en référence aux figures ci-dessous :
La figure 1 est un schéma du procédé de préparation de l'invention ;
La figure 2 illustre la courbe du courant par rapport à la tension de la mesure CV effectuée sur les cellules Al/GPE/Ni après la réalisation de (a) l'électrolyte GPE vierge et (b) l'électrolyte GPE gonflé ;
La figure 3 illustre la variation de masse du PolyDDATFSI GPE après un temps de gonflement dans l'électrolyte EMIMCl:AlCl3;
La figure 4 illustre la courbe du courant par rapport à la tension de la voltampérométrie à balayage linéaire effectuée sur la cellule Al/EMIMCl:AlCl₃/SS316 et sur la cellule Al/GPE/SS316 entre OCV et 2,4 V vs Al/Al³⁺, avec des mesures effectuées à une vitesse de balayage de 0,1 mV s⁻¹ à température ambiante ;
La figure 5 illustre a) le profil de tension et b) le comportement de cyclage du test de cyclage galvanostatique effectué sur la cellule Al/GPE (gonflé)/PG, à un taux de courant différent (25, 50, 75, 100, 200 mA g-1) à température ambiante.

### DESCRIPTION DETAILLEE ET EXEMPLES

L'adéquation du GPE préparé dans une batterie aluminium a été vérifiée en assemblant une cellule aluminium/GPE/graphite pyrolytique. Le prototype de cellule assemblé se caractérise par de bonnes performances électrochimiques et une bonne stabilité, mais par une faible capacité de débit. Les résultats obtenus ont mis en évidence la possibilité d'utiliser une approche de coulée au solvant pour la réalisation de GPE pour les applications de batterie aluminium.

Une membrane électrolytique polymère selon l'invention est composée d'un sel conducteur, d'AlCl3 (chlorure d'aluminium), d'un liquide ionique et d'un polymère. Deux polymères sont présentés à titre d'exemples, le polyDDATFSI et le polyacrylonitrile (PAN). En raison de l'état solide de l'électrolyte polymère, la réactivité et la corrosivité de l'électrolyte polymère sur les matériaux et l'emballage de cellule sont améliorées. La membrane électrolytique polymère a également une stabilité améliorée, ce qui rend la manipulation de la membrane plus facile et plus sûre. La nature du polymère s'est également révélée importante pour l'activation du processus de dépôt d'aluminium métallique.

### - Préparation d'électrolyte gélifié

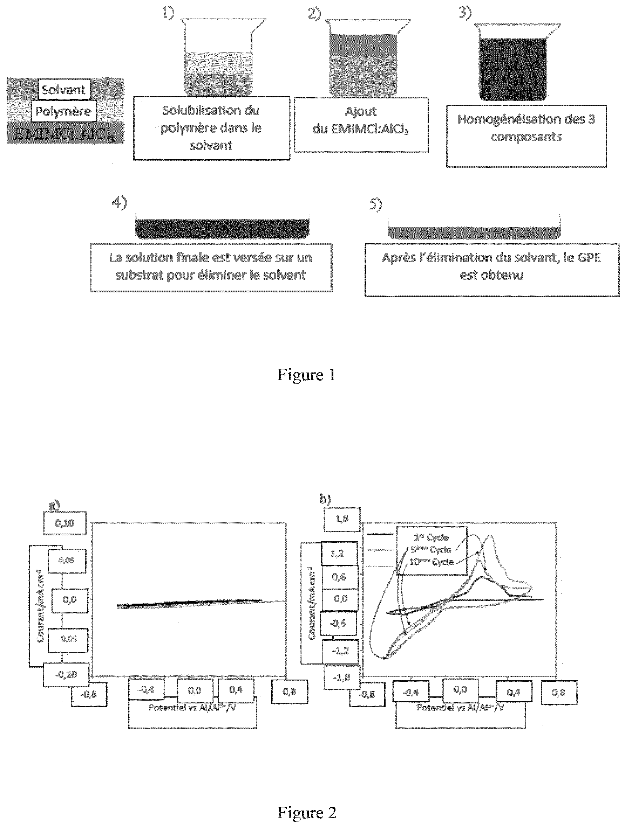

Le schéma de procédure de préparation de GPE est présenté à la figure 1. La première étape implique la solubilisation du polymère (qui peut être polyDDATFSI, PAN, PVDF, PVA, PAA etc.) dans un solvant (qui peut être EC, PC, DMC, toluène, acétamide, urée, etc.) avec la formation d'une solution homogène (étape 1). Une fois que l'électrolyte EMIMCl:AlCl3 est ajouté à la solution avec un rapport pondéral EMIMCl:AlCl3 :polymère compris entre 10:1 et 0,5:1 (étape 2).

Ensuite, le mélange continue de se mélanger jusqu'à l'obtention d'une solution homogène (étape 3). Puis la solution finale est versée sur un substrat (verre ou PTFE) (étape 4), et le solvant est évaporé, obtenant la membrane homogène et mécaniquement stable souhaitée. L'épaisseur de la membrane varie entre 200 et 300 µm. La membrane avec une épaisseur inférieure peut également être facilement obtenue à l'aide de cette procédure.

### - Procédure de processus d'activation de GPE

L'incorporation d'entités électrochimiquement actives dans la membrane ionique à l'état solide autoportante comprenant : un polymère liquide ionique (polyDDATFSI ou polyDDAFSI) ou du polyacrylonitrile (PAN) comme hôte polymère, un liquide ionique, un sel d'aluminium. Ces membranes polymères à l'état solide sont capables de poursuivre un processus de dépôt/décapage efficace d'aluminium uniquement après avoir subi un processus de gonflement pour permettre le placage/décapage de l'aluminium.

La figure 2 présente la comparaison CV du GPE avant et après le processus d'activation, démontrant que lors de l'activation, le GPE est capable de poursuivre efficacement le processus de décapage/dépôt d'aluminium.

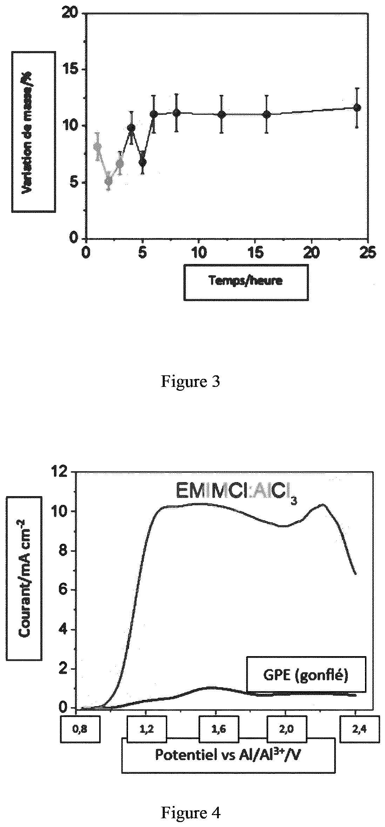

La figure 3 présente la variation de masse de la membrane GPE à base de PolyDDATFSI lors de l'immersion dans l'électrolyte EMIMCl:AlCl3. Cette figure démontre qu'il y a une augmentation de la masse immédiatement au bout d'une heure, ensuite il y a une certaine oscillation dans la variation de masse durant les 6 premières heures de ± 3%, puis la valeur se stabilise à 10 % d'augmentation de masse. La valeur de l'absorption de masse est relativement faible, ce qui est attendu car le GPE contient déjà une grande quantité d'électrolyte IL (entre 30 et 60 % en masse par rapport au composant polymère). Cependant, l'immersion du GPE dans l'électrolyte est nécessaire pour déclencher le processus de décapage/dépôt d'aluminium (voir la figure 2). Ce comportement peut indiquer que le processus de trempage affecte la spéciation ionique dans le GPE, conduisant à la formation du complexe dimère aluminium-chloroaluminate nécessaire pour activer le processus de décapage/dépôt d'aluminium.

L'incorporation de l'électrolyte hautement réactif dans la membrane polymère atténue le problème de réactivité. La figure 4 montre la comparaison de signature du courant par rapport à la tension de la voltampérométrie à balayage linéaire obtenue en utilisant l'électrolyte EMIMCl:AlCl₃ classique et le GPE sur la base du polymère PAN. Le résultat démontre une réduction d'un ordre de grandeur du courant de corrosion au niveau du collecteur de courant en acier inoxydable en utilisant l'électrolyte GPE.

L'aptitude du système GPE préparé pour une application de batterie aluminium a été vérifiée en assemblant une batterie aluminium/GPE/graphite comprenant un disque aluminium métallique comme anode, le GPE comme électrolyte et une feuille de graphite pyrolytique (PG) comme matériau de cathode.

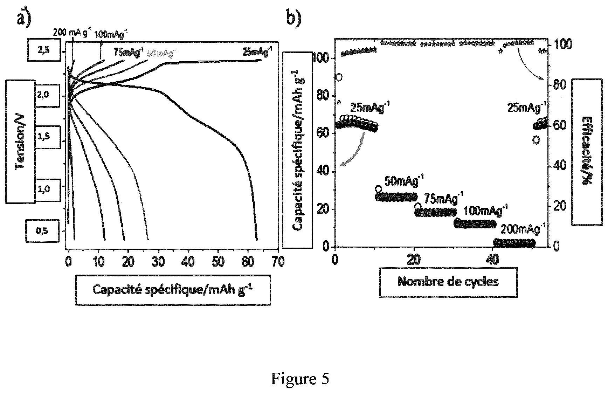

La figure 5 résume le résultat du comportement de cyclage de la cellule aluminium/GPE (gonflé)/PG. La figure 5a présente la signature de tension de la cellule aluminium/GPE (gonflé)/PG à divers taux de courant, indiquant que pour la faible valeur de courant (25 mA g⁻¹), la cellule peut fournir une capacité d'environ 63 mAh g⁻¹, semblable à celle obtenue dans l'électrolyte liquide classique [34-36]. À l'inverse, en augmentant le taux de courant, la capacité de la cellule diminue considérablement, à 50 mA g⁻¹, seuls 28 mAh g⁻¹ peuvent être délivrés, moins de 20 mAh g⁻¹ à 75 mA g⁻¹, 13 mAh g⁻¹ à 100 mA g⁻¹, et pratiquement aucune capacité ne peut être mesurée pour un courant de 200 mA g⁻¹.

La capacité de débit limité du système peut être associée à la polarisation élevée au niveau de l'anode et à la conductivité ionique inférieure du GPE par rapport à l'électrolyte liquide. Outre la capacité de débit limité, le système se caractérise par une très bonne stabilité, comme en témoigne la figure 5b après l'augmentation du courant, le système se stabilise à nouveau à la valeur de capacité initiale lorsqu'il est ramené à un courant de 25 mA g⁻¹.

Bien entendu, la présente invention n'est pas limitée aux modes de réalisation décrits ci-dessus et peut couvrir de nombreux autres modes de réalisation sans sortir du cadre de l'invention.

### RÉFÉRENCES

[1] G. A. Elia, K. Marquardt, K. Hoeppner, S. Fantini, R. Lin, E. Knipping, W. Peters, J.-F. Drillet, S. Passerini, R. Hahn, Adv. Mater. 2016, 28, 7564.
[2] A. M. Stephan, Eur. Polym. J. 2006, 42, 21.
[3] A. Bhide, K. Hariharan, Eur. Polym. J. 2007, 43, 4253.
[4] M. Patel, K. G. Chandrappa, A. J. Bhattacharyya, Solid State Ionics 2010, 181, 844.
[5] A. Bhide, K. Hariharan, Solid State Ionics 2011, 192, 360.
[6] D. Praveen, S. V. Bhat, R. Damle, Ionics (Kiel). 2013, 19, 1375.
[7] C. Cao, W. Liu, L. Tan, X. Liao, L. Li, Chem. Commun. 2013, 49, 11740.
[8] C. Cao, H. Wang, W. Liu, X. Liao, L. Li, Int. J. Hydrogen Energy 2014, 39, 16110.
[9] H. Hou, Q. Xu, Y. Pang, L. Li, J. Wang, C. Zhang, C. Sun, Efficient Storing Energy Harvested by Triboelectric Nanogenerators Using a Safe and Durable All-Solid-State Sodium-Ion Battery. Adv. Sci. 2017, 4*.*
[10] N. K. Jyothi, K. V. Kumar, G. S. Sundari, P. N. Murthy, N. Krishna Jyothi, K. Vijaya Kumar, G. Sunita Sundari, P. Narayana Murthy, Indian J. Phys. 2016, 90, 289.
[11] K. Vignarooban, P. Badami, M. A. K. L. Dissanayake, P. Ravirajan, A. M. Kannan, Ionics (Kiel). 2017, 23, 2817.
[12] D. Kumar, S. A. Hashmi, J. Power Sources 2010, 195, 5101.
[13] F. Bella, F. Colô, J. R. Nair, C. Gerbaldi, ChemSusChem 2015, 8, 3668.
[14] H. Gao, W. Zhou, K. Park, J. B. Goodenough, A Sodium-Ion Battery with a Low-Cost Cross-Linked Gel-Polymer Electrolyte. Adv. Energy Mater. 2016, 6*.*
[15] J.-S. S. Kim, H.-J. J. Ahn, I.-P. P. Kim, K.-W. W. Kim, J.-H. H. Ahn, C.-W. W. Park, H.-S. S. Ryu, J. Solid State Electrochem. 2008, 12, 861.
[16] V. Aravindan, C. Lakshmi, P. Vickraman, Curr. Appl. Phys. 2009, 9, 1106.
[17] D. Kumar, M. Suleman, S. A. Hashmi, Solid State Ionics 2011, 202, 45.
[18] Y. Ansari, B. Guo, J. H. Cho, K. Park, J. Song, C. J. Ellison, J. B. Goodenough, J. Electrochem. Soc. 2014, 161, A1655.
[19] H. Gao, B. Guo, J. Song, K. Park, J. B. Goodenough, Adv. Energy Mater. 2015, 5, 1.
[20] Y. Q. Yang, Z. Chang, M. X. Li, X. W. Wang, Y. P. Wu, Solid State Ionics 2015, 269, 1*.*
[21] S. Janakiraman, A. Surendran, S. Ghosh, S. Anandhan, A. Venimadhav, Electroactive poly(vinylidene fluoride) fluoride separator for sodium ion battery with high coulombic efficiency. Solid State Ionics 2016, 292, 130-135.
[22] Y. Zhu, Y. Yang, L. Fu, Y. Wu, A porous gel-type composite membrane reinforced by nonwoven: promising polymer electrolyte with high performance for sodium ion batteries. Electrochim. Acta 2017, 224, 405-411.
[23] J. Il Kim, Y. Choi, K. Y. Chung, J. H. Park, Adv. Funct. Mater. 2017, 27, 1.
[24] G. A. Elia, J.-B. Ducros, D. Sotta, V. Delhorbe, A. Brun, K. Marquardt, R. Hahn, ACS Appl. Mater. Interfaces 2017, 9, 38381.
[25] H. Wang, Y. Bai, S. Chen, X. Luo, C. Wu, F. Wu, J. Lu, K. Amine, ACS Appl. Mater. Interfaces 2015, 7, 80.
[26] T. Nestler, E. Roedern, N. F. Uvarov, J. Hanzig, G. A. Elia, M. de Vivanco, Phys. Sci. Rev. 2019, 4*.*
[27] D. Muñoz-Torrero, M. Anderson, J. Palma, R. Marcilla, E. Ventosa, ChemElectroChem 2019, 6, 2766.
[28] L. D. Reed, A. Arteaga, E. J. Menke, J. Phys. Chem. B 2015, 119, 12677.
[29] T. Mandai, P. Johansson, J. Phys. Chem. C 2016, 120, 21285.
[30] T. Mandai, P. Johansson, J. Mater. Chem. A 2015, 3, 12230.
[31] Y. Nakayama, Y. Senda, H. Kawasaki, N. Koshitani, S. Hosoi, Y. Kudo, H. Morioka, M. Nagamine, Phys. Chem. Chem. Phys. 2015, 17, 5758.
[32] Z. Yu, S. Jiao, S. Li, X. Chen, W.-L. Song, T. Teng, J. Tu, H.-S. Chen, G. Zhang, D.-N. Fang, Adv. Funct. Mater. 2019, 29, 1806799.
[33] X.-G. Sun, Y. Fang, X. Jiang, K. Yoshii, T. Tsuda, S. Dai, Chem. Commun. 2016, 52, 292.
[34] G. A. Elia, N. A. Kyeremateng, K. Marquardt, R. Hahn, Batter. Supercaps 2018, batt. 201800114.
[35] G. A. Elia, I. Hasa, G. Greco, T. Diemant, K. Marquardt, K. Hoeppner, R. J. Behm, A. Hoell, S. Passerini, R. Hahn, J. Mater. Chem. A 2017, 5, 9682.
[36] G. Greco, D. Tatchev, A. Hoell, M. Krumrey, S. Raoux, R. Hahn, G. A. Elia, J. Mater. Chem. A 2018**.**

## Revendications

1. Procédé de fabrication d'un électrolyte polymère gélifié (GPE), comprenant les étapes :
- de solubilisation (1) d'un polymère dans un solvant, conduisant à la formation d'une première solution homogène ;
- de mélange (2) de ladite solution avec un électrolyte constitué de chlorure d'aluminium avec un rapport pondéral prédéterminé électrolyte:polymère ;
- de mélange (3) dudit mélange jusqu'à obtenir une seconde solution homogène ;
- de versement (4) de ladite seconde solution homogène sur un substrat ;
- d'élimination (5) du solvant pour obtenir une membrane GPE homogène et mécaniquement stable ;
- un processus d'activation de la membrane polymère, de manière à poursuivre le décapage/dépôt d'aluminium sur ladite membrane GPE.

2. Procédé selon la revendication 1, dans lequel l'étape d'élimination de solvant (5) comprend l'évaporation dudit solvant.

3. Procédé selon la revendication 1 ou 2, dans lequel le rapport pondéral électrolyte:polymère est compris entre 10:1 et 0,5:1.

4. Procédé selon l'une quelconque des revendications précédentes, dans lequel la membrane GPE a une épaisseur comprise entre 200 et 300 µm.

5. Procédé selon l'une quelconque des revendications précédentes, dans lequel le polymère comprend du poly(diallyldiméthylammonium)bis(trifluorométhanesulfonyl)imide (polyDDATFSI).

6. Procédé selon l'une quelconque des revendications 1 à 4, dans lequel le polymère comprend du polyacrylonitrile (PAN).

7. Procédé selon l'une quelconque des revendications précédentes, dans lequel le solvant comprend un liquide ionique.

8. Procédé selon l'une quelconque des revendications précédentes, dans lequel l'électrolyte comprend du chlorure de l-éthyl-3-méthylimidazolium-chlorure d'aluminium (EMIMCl:AlCl₃).

9. Procédé selon la revendication 8, dans lequel le processus d'activation comprend une étape d'immersion de la membrane GPE dans un électrolyte EMIMCl:AlCl3.

10. Dispositif de stockage d'énergie électrochimique comprenant une anode, une cathode, et entre lesdites anode et cathode, un électrolyte polymère gélifié (GPE) obtenu à partir du procédé selon l'une quelconque des revendications précédentes.

11. Cellule de batterie aluminium-ion comprenant une anode en aluminium métallique, une cathode, et entre lesdites anode et cathode, un électrolyte polymère gélifié (GPE) obtenu à partir du procédé selon l'une quelconque des revendications 1 à 9.

12. Cellule de batterie aluminium-ion selon la revendication 11, dans laquelle la cathode comprend une feuille de graphite pyrolytique (PG) comme cathode.

13. Utilisation d'un électrolyte polymère gélifié (GPE) obtenu à partir du procédé selon les revendications 1 à 9, pour un revêtement métallique comme protection contre la corrosion.
